# EUROPEAN PATENT SPECIFICATION

(11) **EP 1 583 793 B1**
(45) Date of publication and mention of the grant of the patent: **15.08.2012**
(21) Application number: 04700473.4
(22) Date of filing: 07.01.2004
(51) Int. Cl.: A01N 25/34, A01N 59/16, C08J 7/04, C09D 5/14

(54) **ANTI-MICROBIAL COATED POLYMERIC FILM**
ANTIMIKROBIELLE BESCHICHTETE POLYMERFOLIE
FILM POLYMERE ENDUIT ANTIMICROBIEN

(30) Priority: 16.01.2003 GB 0301034
(43) Date of publication of application: 12.10.2005
(73) Proprietor: DuPont Teijin Films U.S. Limited Partnership, Chester, VA 23836 (US)
(72) Inventor: DENG, Fenghua, Richmond, VA 23233 (US); FRANZYSHEN, Stephen K., Richmond, VA 23236 (US); NUGARA, Peter N., Richmond, VA 23236 (US); MACDONALD, William A., Wilton, Middlesbrough TS90 8JF (GB)
(74) Representative: Cockerton, Bruce Roger
(86) International application number: PCT/GB2004/000016
(87) International publication number: WO 2004/063254

(56) References cited:
- EP-A- 0 846 418
- US-A- 5 296 238
- US-A- 5 441 717
- US-A- 5 728 467

## Description

The present application is concerned with anti-microbial polymeric film, particularly polyester film.

The preparation of polymeric films having anti-microbial properties is well-known. Such films are of use in the provision of anti-microbial surfaces, for example in medical and catering environments. The anti-microbial properties are imparted using an anti-microbial agent. The preparation of such films typically involves disposing the anti-microbial agent into the polymer matrix or on one or more surface(s) as a coating. Desirably, the antimicrobial agent should have a broad spectrum of activity over different microbes, and a low toxicity profile for higher organisms. Metal ions, particularly silver ions, have long been known to exhibit anti-fungal, anti-bacterial and anti-algal activity (hereinafter referred to as anti-microbial activity). Recently, it has been proposed to use an antimicrobial metal ion supported on zirconium phosphate, as disclosed in, for instance, US-5441717, JP-A-3/83905 and US-5296238. US-5556699 discloses use of a zeolite antibacterial agent in a coextruded or laminated film comprising *inter alia* PVC, polyolefin, polyester and/or polyvinyl alcohol layers, which is useful for packaging foods and medical equipment. US-5639466 discloses a packaging film comprising an antibacterial composition of (a) 5-40% lactide or lactic acid oligomer; (b) 0-20% organic plasticiser; and (c) 60-95% lactic acid polymer or copolymer, which is coated as a layer of at least 5 µm in thickness on a polymeric substrate. EP-A-0846418 discloses antibacterial films comprising an inorganic and/or organic antibacterial agent and a hydrophilic substance, which is suitable for use in food packaging.

EP-A-0846 418 describes an anti-bacterial film prepared by coating an anti-bacterial composition onto a base layer. The antibacterial composition comprises an antibacterial agent which is an inorganic compound containing silver, copper or zinc. The antibacterial agent is included in an amount of 5% by weight or less.

WO03/039766 describes a method for coating packaging materials with an antimicrobial coating. The anti-microbial coating comprises a polymer and zeolites containing antimicrobial metal ions, such as silver ions.

Anti-microbial agents are relatively expensive and the consumer must generally balance anti-microbial efficacy against cost. It would be desirable to provide more economical antimicrobial films for a given anti-microbial efficacy, or films having greater anti-microbial efficacy for a given cost. In addition, existing anti-microbial films do not generally exhibit barrier properties to moisture and/or oxygen which are sufficient for packaging applications, for instance food packaging applications, and nor are the existing films sealable (for instance, heat-sealable). In addition, existing anti-microbial films do not generally exhibit good optical properties, such as low haze and high gloss, relative to a film without the anti-microbial agent. It is an object of this invention to provide an antimicrobial film which addresses one or more of the afore-mentioned problems.

According to the present invention, there is provided an anti-microbial polymeric film comprising a polymeric substrate layer having a first and second surface and on a surface thereof a polymeric coating having a thickness of from about 0.01 to about 14.0 µm and comprising an anti-microbial compound in an amount of from about 0.1 to about 50% by weight of the coating layer, characterised in that (i) said coating provides a heat-seal strength of from 39.4g/cm to 98.3g/cm (100 g/in to 2500 g/in) when heat-sealed to itself as measured at 121°C (250°F) under 207KPa (30psi) within 0.35 seconds dwell time and/or (ii) said coating provides a barrier to water vapour and/or oxygen, such that the water vapour transmission rate measured according to ASTM D3985 is in the range of 0.01 to 10g /645.16cm² (100 inches²) day and the oxygen transmission rate measured according to ASTM F1249 is in the range of 0.01 to 10 cm³ /645.16cm² (100 inches²)/day/atm, and (iii) said antimicrobial film exhibits a greater than 1 log reduction in the growth of a population of microbes.

The inventors have unexpectedly found that, for a given amount of anti-microbial agent, a relatively thinner coating provides greater anti-microbial activity than a thicker coating. Above a certain threshold of coating thickness, an increase in the amount of anti-microbial agent in the coating does not provide a proportional increase in anti-microbial efficacy. Further, provided the thickness of the coating is kept below a certain threshold, the value of which may be correlated to the particle size of the anti-microbial agent, then a lower amount of anti-microbial agent having a relatively smaller particle size can be used without detriment to anti-microbial activity. Moreover, the reduction in the amount of antimicrobial agent used produces a corresponding reduction in the haze of the coated film.

As used herein, the term "anti-microbial" means microbicidal activity or microbe growth inhibition in a microbe population. In one embodiment, the microbe (s) is/are selected from the group consisting of *Aspergillus niger*, *Staphylococcus aureus* and *Escherichia coli.* In one embodiment, the term "anti-microbial" means a greater than 2 log reduction, preferably a greater than 3 log reduction, and more preferably a greater than 4 log reduction in the growth of a population of microbes relative to a control.

The anti-microbial agent may be an inorganic or organic compound or a mixture thereof.

The term "inorganic anti-microbial agent" used herein is a general term for inorganic compounds which contain a metal or metal ions, such as silver, zinc, copper and the like which have anti-microbial properties. The inorganic anti-microbial agent can be liquid or solid and is preferably a solid. The metal-containing species may be supported on an inorganic substance such as silica or like metal oxides, zeolite, synthetic zeolite, zirconium phosphate, calcium phosphate, calcium zinc phosphate, ceramics, soluble glass powders, alumina silicone, titanium zeolite, apatite, calcium carbonate and the like.

The term "organic anti-microbial agent" used herein is the general term for natural extracts, low molecular organic compounds and high molecular compounds all of which have antimicrobial properties and which generally contain nitrogen, sulfur, phosphorus or like elements. Examples of useful natural anti-microbial agents are chitin, chitosan, wasabi extracts, mustard extracts, hinokitiol, tea extracts and the like. Examples of useful low molecular organic compounds are allyl isothiocyanate, polyoxyalkylene trialkyl ammonium, benzalkonium chloride, hexamethylene biguamide hydrochloride and like quaternary ammonium salts, organic silicon quaternary ammonium salts, phenylamide, diguamide, tetraalkyl phosphonium salts. Among low molecular organic anti-microbial agents, phosphonium salt compounds show high anti-microbial activity. Examples of useful phosphonium salt compounds are inorganic and organic acid salts of phosphonium such as fluorides, chlorides, bromides, iodides, sulfoisophthalates, sulfoterephthalates, 4-sulfonaphthalene-2,7-dicarboxylates and like sulfonates of tri-n-butyldecyl phosphonium, tri-n-butyloctadecyl phosphonium, tri-n-butylhexadecyl phosphonium, tri-n-butyltetradecyl phosphonium, tri-n-butyldodecyl phosphonium, tri-n-butyldecyl phosphonium or tri-n-butyloctadecyl phosphonium among which tri-n-butylhexadecyl phosphonium salt, tri-n-butyltetradecyl phosphonium salt and tri-n-butyldodecyl phosphonium salt are preferred. High molecular compounds having anti-microbial properties include those having an ammonium salt group, phosphonium salt group, sulfonium salt group or like onium salts, a phenylamide group, diguamide group attached to a straight or branched polymer chain, for example phosphonium salt-containing vinyl polymers, as are known in the art. Examples of other phosphonium salt group-containing high molecular compounds include polyester copolymers containing as main components a dicarboxylic acid component, a glycol component and a phosphonium salt of sulfonic acid group-containing aromatic dicarboxylic acid in an amount of 1 to 50 mole%.

Typical anti-microbial agents include but are not limited to phthalimides, acetamides, phthalonitriles, benzoic acid and its derivatives including hydroxy benzoates, isothiazolinones, nitropropane diols, carbamates, methyl ureas, benzimidazoles, salicylanilides, triclosan-based anti-microbial agents, benomy, sorbic acid and its derivatives, chitin and chitosan and their derivatives, chlorine dioxide-generating powder systems, mercury acetates, organozinc compounds, metals such as silver, copper and zinc, and ions of such metals.

Liquid anti-microbial agents include dibromocyanoacetamide (for example, Amerstat.RTM. 300 made by Drew Industrial Division of Ashland Chemicals, Boonton, N.J., USA). Solid anti-microbial agents include 2-bromo-2-nitropropane-1,3-diol (for example, Canguard RTM 409 made by Angus Chemical Co., Buffalo Grove; Illinois, USA) and 3,5-dimethyltetrahydro-1,3,5-2H-thiazine-2-thione (for example, Nuosept RTMS made by Creanova, Inc., Piscataway, N.J., USA or Troysan RTM 142 made by Troy Chemical Corp., West Hanover, N.J., USA). Other solid anti-microbial agents include N- (trichloromethyl)-thiophthalimide (for example, Fungitrol RTM 11 made by Creanova, Inc.), butyl-p-hydroxy-benzoate (for example, Butyl Parabens RTM made by International Sourcing Inc., Upper Saddle River, N.J., USA), diiodomethyl-p-tolysulfone (for example, Amical RTM WP made by Angus Chemical Co.), and tetrachloroisophthalonitrile (for example, Nuocide RTM 960 made by Creanova, Inc.).

With regard to metal-containing anti-microbial agents, silver-containing agents are particularly preferred. Sources of silver for anti-microbial use include metallic silver, silver salts and organic compounds that contain silver. Silver salts include silver carbonate, silver sulfate, silver nitrate, silver acetate, silver benzoate, silver chloride, silver fluoride, silver iodate, silver iodide, silver lactate, silver nitrate, silver oxide and silver phosphates. Organic compounds containing silver may include for example, silver acetylacetonate, silver neodecanoate and silver ethylenediaminetetraacetates.

Silver containing zeolites (for example, AJ10D containing 2.5% silver as Ag(I), made by AgION.TM. Tech. L.L.C., Wakefield, Mass., USA) are of particular use. Zeolites are useful because when carried in a polymer matrix they may provide silver ions at a rate and concentration that is effective at killing and inhibiting microorganisms without harming higher organisms.

In a preferred embodiment, the anti-microbial compound is selected from those disclosed in US-5441717 or US-5296238. Preferably, the anti-microbial compound has formula (I):

M¹ₐH_{b}A_{c}M²₂(PO₄)₃.nH₂O (I)

wherein
M¹ is at least one metal ion selected from silver, copper, zinc, tin, mercury, lead, iron, cobalt, nickel, manganese, arsenic, antimony, bismuth, barium, cadmium and chromium; A is at least one ion selected from an alkali or alkaline earth metal ion;
M² is a tetravalent metal ion;
a and b are positive numbers and c is 0 or a positive number such that (ka + b + mc) =1;
k is the valence of metal M¹;
m is the valence of metal A; and
0≤n≤6.

Preferably, M¹ is silver and the anti-microbial compound has formula (II):

AgₐH_{b}A_{c}M₂(PO₄)₃.nH₂O (II)

wherein
A is at least one ion selected from an alkali or alkaline earth metal ion;
M is a tetravalent metal ion;
a, b and c are positive numbers such that (a + b + mc) =1;
m is the valence of metal A; and
0≤n≤6.

The anti-microbial compounds of formula (I) may be prepared according to the methods described in US-5441717 or US-5296238. The anti-microbial silver ion is supported on the zirconium phosphate. The metal A is preferably selected from lithium, sodium, potassium, magnesium and calcium, and is preferably sodium. The metal M is preferably selected from zirconium, titanium and tin, preferably from zirconium and titanium, and is preferably zirconium.

The value of the parameter "a" is preferably at least 0.001, more preferably at least 0.01, and is preferably in the range of 0.01 to 0.5, more preferably 0.1 to 0.5, more preferably 0.10 to 0.30. In one embodiment, the value of the parameter "a" is in the range from 0.4 to 0.5 or in the range 0.15 to 0.25, preferably in the range 0.4 to 0.5.

The value of the parameter "b" is preferably at least 0.2, more preferably in the range of 0.2 to 0.7, more preferably in the range of 0.2 to 0.60. In one embodiment, the value of the parameter "b" is on the range 0.2 to 0.3.

In one embodiment, the antimicrobial compound is selected from Ag_{0.18}Na_{0.57}H_{0.25}Zr₂(PO₄)₃ and Ag_{0.46}Na_{0.29}H_{0.25}Zr₂(PO₄)₃.

Other specific examples of inorganic antibacterial agents are Novaron (product of Toagosei Co., Ltd.), Bactekiller (Kanebo Kasei Co., Ltd.), fine particles of antibacterial spherical ceramics S1, S2, S5 (Adomatex Co., Ltd.), Horonkiller (Nikko Co., Ltd.), Zeomic (Sinagawa Fuel Co., Ltd.), Amenitop (Matsushita Electric Industrial Co., Ltd.), Ionpure (Ishizuka Glass Co. Ltd.) and like silver-based antibacterial agents, Z-Nouve (Mitsui Mining & Smelting Co., Ltd.) and like zinc-based antibacterial agents, P-25 (Nippon Aerosil Co., Ltd.), ST-135 (Ishihara Sangyo Co., Ltd.) and like fine particles of titanium dioxide and sol-gel materials thereof. Useful composite particles include, for example, fine particles of titanium dioxide coated with silica, GYT (product of Goyoshiko Co., Ltd.).

The polymeric substrate layer is a self-supporting film or sheet by which is meant a film or sheet capable of independent existence in the absence of a supporting base. The substrate may be formed from any suitable film-forming polymer, including polyolefin (such as polyethylene and polypropylene), polyamide (including nylon), PVC and polyester. The polymeric substrate may be oriented, such as oriented polypropylene or polyethylene terephthalate (PET), or amorphous, as discussed in more detail below. In a preferred embodiment, the substrate is polyester, and particularly a synthetic linear polyester.

The preferred synthetic linear polyesters of the substrate may be obtained by condensing one or more dicarboxylic acids or their lower alkyl (up to 6 carbon atoms) diesters, eg terephthalic acid, isophthalic acid, phthalic acid, 2,5-, 2,6- or 2,7-naphthalenedicarboxylic acid, succinic acid, sebacic acid, adipic acid, azelaic acid, 4,4'-diphenyldicarboxylic acid, hexahydro-terephthalic acid or 1,2-bis-p-carboxyphenoxyethane (optionally with a monocarboxylic acid, such as pivalic acid) with one or more glycols, particularly an aliphatic or cycloaliphatic glycol, e.g. ethylene glycol, 1,3-propanediol, 1,4-butanediol, neopentyl glycol and 1,4-cyclohexanedimethanol. An aromatic dicarboxylic acid is preferred. An aliphatic glycol is preferred. Polyesters or copolyesters containing units derived from hydroxycarboxylic acid monomers, such as ω-hydroxyalkanoic acids (typically C₃-C₁₂) such as hydroxypropionic acid, hydroxybutyric acid, p-hydroxybenzoic acid, m-hydroxybenzoic acid, or 2-hydroxynaphthalene-6-carboxylic acid, may also be used.

In a preferred embodiment, the polyester is selected from polyethylene terephthalate and polyethylene naphthalate. Polyethylene terephthalate (PET) is particularly preferred.

The substrate may comprise one or more discrete layers of the above film-forming materials. The polymeric materials of the respective layers may be the same or different. For instance, the substrate may comprise one, two, three, four or five or more layers and typical multi-layer structures may be of the AB, ABA, ABC, ABAB, ABABA or ABCBA type. Preferably, the substrate comprises only one layer.

In one embodiment, the substrate is a bilayer substrate wherein one layer (i.e. the layer remote from the surface coated with the anti-microbial composition) is a heat-sealable layer. Heat-sealable layers are well-known in the art and include polymeric materials such as polyester, EVA or modified polyethylene. In one embodiment, the heat-sealable layer comprises a linear polyester resin, particularly a copolyester resin derived from one or more of the dicarboxylic acid(s) with one or more of the glycol(s) noted above.

Formation of the substrate may be effected by conventional techniques well-known in the art. Conveniently, formation of the substrate is effected by extrusion, in accordance with the procedure described below. In general terms the process comprises the steps of extruding a layer of molten polymer, quenching the extrudate and orienting the quenched extrudate in at least one direction.

The substrate may be uniaxially-oriented, but is preferably biaxially-oriented, as noted above. Orientation may be effected by any process known in the art for producing an oriented film, for example a tubular or flat film process. Biaxial orientation is effected by drawing in two mutually perpendicular directions in the plane of the film to achieve a satisfactory combination of mechanical and physical properties.

In a tubular process, simultaneous biaxial orientation may be effected by extruding a thermoplastics polymer tube which is subsequently quenched, reheated and then expanded by internal gas pressure to induce transverse orientation, and withdrawn at a rate which will induce longitudinal orientation.

In the preferred flat film process, the substrate-forming polymer is extruded through a slot die and rapidly quenched upon a chilled casting drum to ensure that the polymer is quenched to the amorphous state. Orientation is then effected by stretching the quenched extrudate in at least one direction at a temperature above the glass transition temperature of the polyester. Sequential orientation may be effected by stretching a flat, quenched extrudate firstly in one direction, usually the longitudinal direction, i.e. the forward direction through the film stretching machine, and then in the transverse direction. Forward stretching of the extrudate is conveniently effected over a set of rotating rolls or between two pairs of nip rolls, transverse stretching then being effected in a stenter apparatus. Alternatively, the cast film may be stretched simultaneously in both the forward and transverse directions in a biaxial stenter. Stretching is effected to an extent determined by the nature of the polymer, for example polyethylene terephthalate is usually stretched so that the dimension of the oriented film is from 2 to 5, more preferably 2.5 to 4.5 times its original dimension in the or each direction of stretching. Typically, stretching is effected at temperatures in the range of 70 to 125°C. Greater draw ratios (for example, up to about 8 times) may be used if orientation in only one direction is required. It is not necessary to stretch equally in the machine and transverse directions although this is preferred if balanced properties are desired.

A stretched film may be, and preferably is, dimensionally stabilised by heat-setting under dimensional restraint at a temperature above the glass transition temperature of the polyester but below the melting temperature thereof, to induce crystallisation of the polyester. The actual heat-set temperature and time will vary depending on the composition of the film but should not be selected so as to substantially degrade the mechanical properties of the film. Within these constraints, a heat-set temperature of about 135° to 250°C is generally desirable, as described in GB-A-838708.

Where the substrate comprises more than one layer, preparation of the substrate is conveniently effected by coextrusion, either by simultaneous coextrusion of the respective film-forming layers through independent orifices of a multi-orifice die, and thereafter uniting the still molten layers, or, preferably, by single-channel coextrusion in which molten streams of the respective polymers are first united within a channel leading to a die manifold, and thereafter extruded together from the die orifice under conditions of streamline flow without intermixing thereby to produce a multi-layer polymeric film, which may be oriented and heat-set as hereinbefore described. Formation of a multi-layer substrate may also be effected by conventional lamination techniques, for example by laminating together a preformed first layer and a preformed second layer, or by casting, for example, the first layer onto a preformed second layer. Where the substrate comprises a heat-sealable layer, the heat-sealable layer may also be applied by conventional coating techniques.

In one embodiment, the substrate is heat-shrinkable. The shrinkage characteristics of a film are determined by the stretch ratios and heat-setting conditions employed during its manufacture, as is well-known to the skilled person. In general, the shrinkage behaviour of a film which has not been heat-set corresponds to the degree to which the film has been stretched during its manufacture. In the absence of heat-setting, a film which has been stretched to a high degree will exhibit a high degree of shrinkage when subsequently exposed to heat; a film which has only been stretched by a small amount will only exhibit a small amount of shrinkage. Heat-setting has the effect of providing dimensional stability to a stretched film, and "locking" the film in its stretched state. Thus, the shrinkage behaviour of a film under the action of heat depends on whether, and to what extent, the film was heat-set after the stretching operation(s) effected during its manufacture. In general, a film which has experienced a temperature T₁ during the heat-setting operation will exhibit substantially no shrinkage below temperature T₁ when subsequently exposed to heat after manufacture. Accordingly, in order to impart shrinkage characteristics, the substrate is not heat-set or partially heat-set at a relatively low temperature and/or using a relatively short duration after stretching has been effected. A shrinkable substrate may exhibit shrinkage in one or both directions of the film. The degree of shrinkage in one dimension may be the same as, or different to, the degree of shrinkage in the orthogonal direction. Preferably, the shrinkage is in the range of from about 0 to about 80% when placed in a water bath at 100°C for 30 seconds, preferably from about 5 to about 80%, preferably from about 10 to about 80%, more preferably from about 10 to 60%.

The substrate layer is suitably of a thickness between about 5 and 350µm, preferably from 12 to about 250 µm and particularly from about 20 to about 75 µm.

The coating composition in which the anti-microbial compound is contained may comprise any suitable polymeric resin, including epoxy resins, polyester resins, acrylic resins, urethane resins and siloxanes.

In a preferred embodiment, the coating comprising the anti-microbial agent is one which is sufficient to provide a barrier to water vapour and/or oxygen. In one embodiment, the coating is sufficient to provide a water vapour transmission rate in the range of 0.01 to 10g 645.16 cm² (100 inches²)/day, preferably 0.01 to 0.1 g 645.16 cm² (100 inches²) /day, and in one embodiment to 1.0g 645.16 cm² (100 inches²)/day, and/or an oxygen transmission rate in the range of 0.01 to 10 cm³ 645.16 cm² (100 inches²)/day/atm, preferably 0.01 to 1 cm³ 645.16 cm² (100 inches²)day/atm, and in one embodiment 0.1 to 1 cm³ 645.16 cm² (100 inches²)/day/atm. Suitable coat weights are in the range of 0.01 to 14 g/m², preferably 0.02 to 1.5 g/m². Thus, the anti-microbial agent may be incorporated into conventional barrier coatings such as PVDC, PCTFE, PE, PP, EVOH or PVOH. PVDC layers are particularly suitable for providing a barrier to both gas and water vapour; EVOH and PVOH layers are particularly suitable for providing a barrier to gas; while PCTFE, PE and PP layers are particularly suitable for providing a barrier to water vapour. Suitable layers are known in the art and are disclosed, for instance, in US-5328724 (EVOH), US-5151331 (PVDC), US-3959526 (PVDC), US-6004660 (PVDC and PVOH). Suitable PVDC polymeric layers are copolymers of 65 to 96% by weight of vinylidene chloride and 4 to 35% of one or more comonomers such as vinyl chloride, acrylonitrile, methacrylonitrile, methyl methacrylate, or methyl acrylate, and are generally referred to as saran. A suitable grade contains about 7 weight percent methacrylonitrile, 3 weight percent methyl methacrylate, and 0.3 weight percent itaconic acid comonomers.

In a further preferred embodiment, the coating comprising the anti-microbial agent is a sealant coating sufficient to provide a heat-seal strength of from 39.4 g/cm to 84.3 g/cm (100 g/in to 2500 g/in) when heat-sealed to itself according to the test method described herein. Preferably the, heat-seal strength is at least about 118.1g/cm (300 g/in), preferably at least 196.9g/cm (500g/in), preferably at least 295.3g/cm (750 g/in). Suitable coat weights are in the range of 0.5 to 14 g/m², preferably 1.0 to 10 g/m². Suitable heat-sealable or sealant coatings include ethylene vinyl acetate (EVA), amorphous polyesters (APET), olefinic polymers such as polyethylene (PE), caprolactone, acid copolymers such as ethylene methacrylic acid (EMAA), ionomers such as Surlyn, and styrenic copolymers such as styrene isoprene styrene (SIS). Suitable layers are well-known in the art. US-4375494 and US-6004660 describe amorphous copolyester sealant layers.

Suitable copolyesters may comprise an aromatic dicarboxylic acid and an aliphatic dicarboxylic acid. Suitable aromatic dicarboxylic acids include terephthalic acid, isophthalic acid, phthalic acid, or 2,5-, 2,6- or 2,7-naphthalenedicarboxylic acid, and suitable aliphatic dicarboxylic acids include succinic acid, sebacic acid, adipic acid, azelaic acid, suberic acid or pimelic acid. A preferred aromatic dicarboxylic acid is terephthalic acid. Preferred aliphatic dicarboxylic acids are selected from sebacic acid, adipic acid and azelaic acid. A particularly preferred aliphatic diacid is sebacic acid. The concentration of the aromatic dicarboxylic acid present in the copolyester is preferably in the range from 40 to 80, more preferably 45 to 65, and particularly 50 to 60 mole % based on the dicarboxylic acid components of the copolyester. The glycol component of the copolyester of the coating layer preferably contains from 2 to 8, more preferably 2 to 4 carbon atoms. Suitable glycols include ethylene glycol, 1,3-propanediol, 1,3-butane diol, 1,4-butanediol, 1,5-pentane diol, neopentyl glycol, 2,2-dimethyl-1,3-propanediol, diethylene glycol, triethylene glycol and 1,4-cyclohexanedimethanol. An aliphatic glycol, particularly ethylene glycol or 1,4-butanediol, is preferred. In a particularly preferred embodiment, the aliphatic glycol is 1,4-butanediol. Such copolyesters preferably have a glass transition point of less than 10°C, more preferably less than 0°C, particularly in the range from -50°C to 0°C, and especially -50°C to -10°C, and a melting point in the range from 90°C to 250°C, more preferably 110°C to 175°C, and particularly 110°C to 155°C. Particularly preferred examples of such copolyesters are (i) copolyesters of azeleic acid and terephthalic acid with an aliphatic glycol, preferably ethylene glycol; (ii) copolyesters of adipic acid and terephthalic acid with an aliphatic glycol, preferably ethylene glycol; and (iii) copolyesters of sebacic acid and terephthalic acid with an aliphatic glycol, preferably butylene glycol. Preferred polymers include a copolyester of sebacic acid/terephthalic acid/butylene glycol (preferably having the components in the relative molar ratios of 45-55/55-45/100, more preferably 50/50/100) having a glass transition point (T_{g}) of -40°C and a melting point (Tₘ) of 117°C), and a copolyester of azeleic acid/terephthalic acid/ethylene glycol (preferably having the components in the relative molar ratios of 40-50/60-50/100, more preferably 45/55/100) having a Tg of -15°C and a Tₘ of 150°C. Suitable EVA polymers may be obtained from DuPont as Elvax^{™} resins. Typically, these resins have a vinyl acetate content in the range of 9% to 40%, and typically 15% to 30%.

In a further embodiment, the coating comprising the anti-microbial agent provides both barrier and heat-seal properties, and PVDC coatings are suitable in this regard.

In an alternative embodiment, a heat-sealable coating may be applied to one surface of the substrate, and a barrier layer on the other surface of the substrate. Anti-microbial agents may be incorporated into either or both layers in this embodiment.

The antimicrobial agent may be added to the coating composition in accordance with conventional procedures. For instance, the anti-microbial agent can be added directly to the coating vehicle under adequate agitation, or it can be pre-dispersed or pre-mixed in an appropriate liquid medium (such as water or organic solvents). In an aqueous coating composition, surface emulsifiers may be used to help the dispersion of the anti-microbial agent. The pre-dispersed/pre-mixed anti-microbial agent is added to the main coating composition under adequate agitation to ensure uniform distribution.

The anti-microbial compound may be present in an amount from about 0.1 to about 50% by weight of the coating layer, preferably from about 0.1 to about 35%, preferably from about 0.1 to about 25 %, preferably from about 0.1 to about 15%, preferably from about 0.1 to about 10%, preferably from about 0.1 to about 5.0%. In one embodiment, particularly wherein the anti-microbial compound is particulate, the anti-microbial compound is present in an amount of from 0.2 to about 3.0%, and more preferably 0.5 to 2.0% by weight of the coating layer. In one embodiment, the anti-microbial compound is present at no more than 2.0% by weight of the coating layer.

The coating may be applied to the substrate either in-line or off-line. The coating may be applied to an already-oriented substrate. However, application of the coating composition is preferably effected before or during the stretching operation(s). For instance, the coating may be applied to the film substrate between the two stages (longitudinal and transverse) of a biaxial stretching operation. Thus, the film substrate may be stretched firstly in the longitudinal direction over a series of rotating rollers, coated with the coating composition, and then stretched transversely in a stenter oven, and preferably then heat-set. The coating composition may be applied to the polymer film substrate in aqueous or organic solution, in a dispersion or in an emulsion, suitably in neat form, by any suitable conventional coating technique such a gravure roll coating, reverse roll coating, dip coating, bead coating, slot coating, electrostatic spray coating, extrusion coating or melt coating.

Prior to deposition of the coating composition onto the substrate, the exposed surface thereof may, if desired, be subjected to a chemical or physical surface-modifying treatment, as are well-known in the art, in order to improve the bond between that surface and the subsequently applied coating. Physical surface-modifying treatments include flame treatment, ion bombardment, electron beam treatment, ultra-violet light treatment and corona discharge.

The coating layer has a thickness in the range of about 0.01 to 14.0 µm. In one embodiment, the coating thickness is no more than about 5 µm, preferably no more than about 4 µm, preferably no more than about 2 µm, and preferably in the range of about 0.02 to about 1.5 µm. In one embodiment, the coating layer thickness is 0.5 microns or greater.

The present invention is particularly concerned with particulate anti-microbial agents and the inventors have found that the thickness of the coating layer may be correlated to the particle size of the anti-microbial compound. Thus, in a preferred embodiment, the thickness (in µm) of the coating layer is in the range of 70 to 130%, preferably in the range 80 to 120%, more preferably in the range 90 to 110%, and more preferably in the range 95 to 105% of the volume distributed mean particle diameter (in µm) of the anti-microbial particles. In one embodiment, the thickness of the coating layer is less than the volume distributed mean particle diameter of the anti-microbial particles, preferably such that thickness is in the range of 70 to 99 %, preferably in the range of 80 to 99%, more preferably in the range of 90 to 99% of the volume distributed mean particle diameter of the anti-microbial particles.

In a preferred embodiment, the particle size of the anti-microbial compound is such that the volume distributed mean particle diameter is in the range of 0.4 to 10 µm, preferably 1.0 to 6.0 µm, and more preferably 1.0 to 3.0 µm.

The polymeric substrate may conveniently contain any of the additives conventionally employed in the manufacture of polymeric films. Thus, agents such as dyes, pigments, voiding agents, lubricants, anti-oxidants, radical scavengers, UV absorbers, fire retardants, thermal stabilisers, anti-blocking agents, surface active agents, slip aids, optical brighteners, gloss improvers, prodegradents, viscosity modifiers and dispersion stabilisers may be incorporated in the substrate as appropriate. In particular the substrate may comprise a particulate filler. The filler may, for example, be a particulate inorganic filler or an incompatible resin filler or a mixture of two or more such fillers. Particulate inorganic fillers include metal or metalloid oxides, such as alumina, silica (especially precipitated or diatomaceous silica and silica gels) and titania, calcined china clay and alkaline metal salts, such as the carbonates and sulphates of calcium and barium.

The inorganic filler, if used, should be finely-divided, and the volume distributed median particle diameter (equivalent spherical diameter corresponding to 50% of the volume of all the particles, read on the cumulative distribution curve relating volume % to the diameter of the particles - often referred to as the "D(v,0.5)" value) thereof is preferably in the range from 0.01 to 5 µm, more preferably 0.05 to 1.5 µm, and particularly 0.15 to 1.2 µm. The size distribution of inorganic filler particles is also an important parameter It is preferred that 99.9% by number of the inorganic filler particles should not exceed 30 µm, preferably should not exceed 20 µm, and more preferably should not exceed 15 µm. Preferably at least 90%, more preferably at least 95% by volume of the inorganic filler particles are within the range of the volume distributed median particle diameter ± 0.8 µm, and particularly ± 0.5 µm. Particle size of the filler particles may be measured by electron microscope, coulter counter, sedimentation analysis and static or dynamic light scattering. Techniques based on laser light diffraction are preferred. The median particle size may be determined by plotting a cumulative distribution curve representing the percentage of particle volume below chosen particle sizes and measuring the 50th percentile.

If employed in a coating layer, the filler particles, such as Aerosil^{™} OX50 or Seahostar^{™} KEP30 or KEP50, may be present in an amount of from about 0 to about 5%, and more preferably 0.1 to 2.5% by weight relative to the weight of the polymer of the coating layer.

The components of the composition of a layer may be mixed together in a conventional manner. For example, by mixing with the monomeric reactants from which the layer polymer is derived, or the components may be mixed with the polymer by tumble or dry blending or by compounding in an extruder, followed by cooling and, usually, comminution into granules or chips. Masterbatching technology may also be employed.

The film preferably has a % of scattered visible light (haze) of <15%, preferably <12%, preferably <9%, preferably <6%, more preferably <3.5 % and particularly <2%, measured according to the standard ASTM D 1003. In this embodiment, the substrate layer is unfilled or filler is typically present in only small amounts, generally not exceeding 0.5% and preferably less than 0.2% by weight of the substrate polymer.

The 60° gloss value of the film (measured as described herein) is preferably at least 70, more preferably at least 80, and more preferably at least 85.

In a first preferred embodiment of the present invention, there is provided an anti-microbial polymeric film comprising a polymeric substrate layer having a first and second surface and on a surface thereof a polymeric coating having a thickness of from about 0.01 to about 14.0 µm and comprising an anti-microbial compound in an amount of from about 0.1 to about 50% by weight of the coating layer, characterised in that said coating provides a heat-seal strength of from 39.4 g/cm to 984.3 g/cm (100 g/in to 2500 g/in)when heat-sealed to itself.

In a second preferred embodiment of the present invention, there is provided an anti-microbial polymeric film comprising a polymeric substrate layer having a first and second surface and on a surface thereof a polymeric coating having a thickness of from about 0.01 to about 14.0 µm and comprising an anti-microbial compound in an amount of from about 0.1 to about 50% by weight of the coating layer, characterised in that said coating provides a barrier to water vapour and/or oxygen, such that the water vapour transmission rate is in the range of 0.01 to 10g/ 645.16 cm² (100 inches²)/day and the oxygen transmission rate is in the range of 0.01 to 10 cm³/ 645.16 cm² (100 inches²)/day/atm.

In a third preferred embodiment of the present invention, there is provided an antimicrobial polymeric film comprising a polymeric substrate layer having a first and second surface and on a surface thereof a polymeric coating having a thickness of from about 0.01 to about 14.0 µm and comprising an anti-microbial compound in an amount of from about 0.1 to about 50% by weight of the coating layer, characterised in that (i) said coating provides a heat-seal strength of from 39.4 g/cm to 984.3 g/cm (100 g/in to 2500 g/in) when heat-sealed to itself and (ii) said coating provides a barrier to water vapour and/or oxygen, such that the water vapour transmission rate is in the range of 0.01 to 10g/ 645.16 cm² (100 inches²)day and the oxygen transmission rate is in the range of 0.01 to 10 cm³ 645.16 cm² (100 inches²)day/atm.

In a fourth preferred embodiment, there is provided an anti-microbial polymeric film comprising a polymeric substrate layer having a first and second surface and on a surface thereof a polymeric coating comprising an anti-microbial compound in an amount, of from about 0.1 to about 50% by weight of the coating layer, wherein said coating has a thickness of from about 0.01 to about 14.0 µm, and wherein said anti-microbial compound has formula (I):

AgₐH_{b}A_{c}M₂(PO₄)₃.nH₂O (I)

wherein
A is at least one ion selected from an alkali or alkaline earth metal ion;
M is a tetravalent metal ion;
a, b and c are positive numbers such that (a + b + mc) = 1;
m is the valence of metal A; and
0≤n≤6, preferably wherein (i) said coating provides a heat-seal strength of from 39.4g/cm to 984.3g/cm (100 g/in) to 2500 when heat-sealed to itself and/or (ii) said coating provides a barrier to water vapour and/or oxygen, such that the water vapour transmission rate is in the range of 0.01 to 10g/ 645.16cm² (100 inches²)/day and the oxygen transmission rate is in the range of 0.01 to 10 cm³ 645.16cm² (100 inches²)/day/atm.

In a further aspect, the present invention provides a process for the preparation of an antimicrobial polymeric film comprising:
(i) providing a polymeric substrate layer; and
(ii) coating on a surface thereof a polymeric coating composition comprising an antimicrobial compound in an amount of from about 0.1 to about 50% by weight of the coating layer, wherein said coating layer has a thickness of from about 0.01 to about 14.0 µm, characterised in that (i) said coating provides a heat-seal strength of from 39.4 g/cm to 984.3 g/cm (100 g/in to 2500 g/in)when heat-sealed to itself and/or (ii) said coating provides a barrier to water vapour and/or oxygen, such that the water vapour transmission rate is in the range of 0.01 to 10g 645.16cm² (100 inches²)/day and the oxygen transmission rate is in the range of 0.01 to 10 cm³/645.16cm² (100 inches²)day/atm.

The films obtainable using the invention may be used to provide an anti-microbial surface in a variety of applications, such as in medical and catering environments and equipment, and in food packaging. Other applications include restrooms, garbage disposals, animal feed troughs, schools, swimming pool areas, automobile fixtures, public access fixtures, public seating, public transportation fixtures, toys, and other industrial, agricultural, commercial or consumer products.

The following test methods may be used to determine certain properties of the polymeric film:
(i) Haze (% of scattered transmitted visible light) is measured using a Gardner Hazegard System XL-211, according to ASTM D 1003.
(ii) 60° gloss value of the film surface is measured using a Dr Lange Reflectometer REFO 3 (obtained from Dr Bruno Lange, GmbH, Dusseldorf, Germany) according to DIN 67530. Reflection was measured at three angles (20°, 60° and 85°) and measurements were carried out in both the machine and transverse directions of the film.
(iii) Water vapour transmission rate is measured according to ASTM D3985.
(iv) Oxygen transmission rate is measured according to ASTM F1249.
(v) Anti-microbial efficacy against bacteria was assessed using the "plate contact method" against 0.4 ml of 10⁵ cells/ml in Na/K phosphate buffer with 22 hours exposure. Film samples were tested against *Staphylococcus aureus* and *Escherichia coli.*
(vi) Anti-microbial efficacy against fungi was assessed using a method based on ISO-846 using *Aspergillus niger* ATTC 6275. Each sample was inoculated with 0.1 ml of a solution of 10⁵ fungal spores per ml, and incubated at 29°C for up to 35 days. The fungal growth was assess by visual observation of the samples for samples where fungal growth that has localised to droplets. Efficacy is then rated in three categories:

| **Observed growth in droplets** | **Category** |
|---|---|
| Droplets have dark growth; many spores | A |
| Droplets have light growth; few/no spores | B |
| Droplets have no or scarce growth | C |

The rating of a given sample is then the number of droplets in each category.
(vii) Heat-seal strength is measured by heat-sealing a film sample to itself (coating layer contacted with coating layer) at 121°C(250°F) under 207kPa(30 psi) with 0.35 seconds dwell time in a Sentinel^{®} apparatus.
(viii) Shrinkage is measured by placing a film sample (a strip of approximately I inch) in a water bath at 100°C for 30 seconds and the difference in length before and after heat treatment used to calculate the shrinkage.

The invention is further illustrated by the following examples. It will be appreciated that the examples are for illustrative purposes only and are not intended to limit the invention as described above. Modification of detail may be made without departing from the scope of the invention.

### EXAMPLES

In the following Examples the coating compositions were coated onto a biaxially oriented and heat-set polyethylene terephthalate film (Mylar^{®} LBF Film, DuPont Teijin Films).

### Examples 1 to 4

The coating composition was made by compounding the anti-microbial agent Alphasan^{™} RC2000 (Milliken) in a PVDC (Saran F278; Dow Chemicals) barrier coating. The coating composition was made according to conventional techniques as described herein and had the following components:
Saran F278: 97.5% (Ex. 1), 97.0% (Ex. 2), 96.0% (Ex.3), 98% (Ex. 4)
Alphasan RC2000: 0.5% (Ex. 1), 1.0 (Ex. 2), 2.0% (Ex. 3), 0:0% (Ex. 4)
Filler, 1.2% (Microtalc; Ashland Chemical Co. USA)
Acid Scavengers, 0.4% (Drapex 6.8; Crompton Corp. USA)
Wax 0.4% (Carnauba Wax; Frank B Ross Company USA)
THF and toluene are used as solvents and to make the bath at 20.0% solids.

The anti-microbial particles had a volume distributed mean particle diameter of 1.624 µm, and a size distribution such that 95% of the particles had a diameter of less than 4.697 µm. Example 4 is a comparative example. The coating composition is applied by roll coater and dried in an oven at 120°C.

### Examples 5 to 8

The coating composition was made by compounding the afore-mentioned anti-microbial agent Alphasan^{™} RC2000 (Milliken) in an APET (MOR-ESTER 49002; Rohm & Haas) sealant coating. Example 8 is a comparative example. The coating composition was made according to conventional techniques as described herein and had the following components:
Mor-Ester 49002: 95.5% (Ex. 5-7), 97.5% (Ex. 8)
Alphasan RC2000: 2.0% (Ex. 5-7), 0.0% (Example 8)
Silica, 1.5% (Syloid^{®} 244; W. R. Grace & Co. USA)
Blocking agent, 1.0% (Kemamide E; Witco Chemical USA)
THF is used as the solvent and to make the bath at 16.0% solid.

The coating is applied by roll coater and dried in an oven at 100°C.

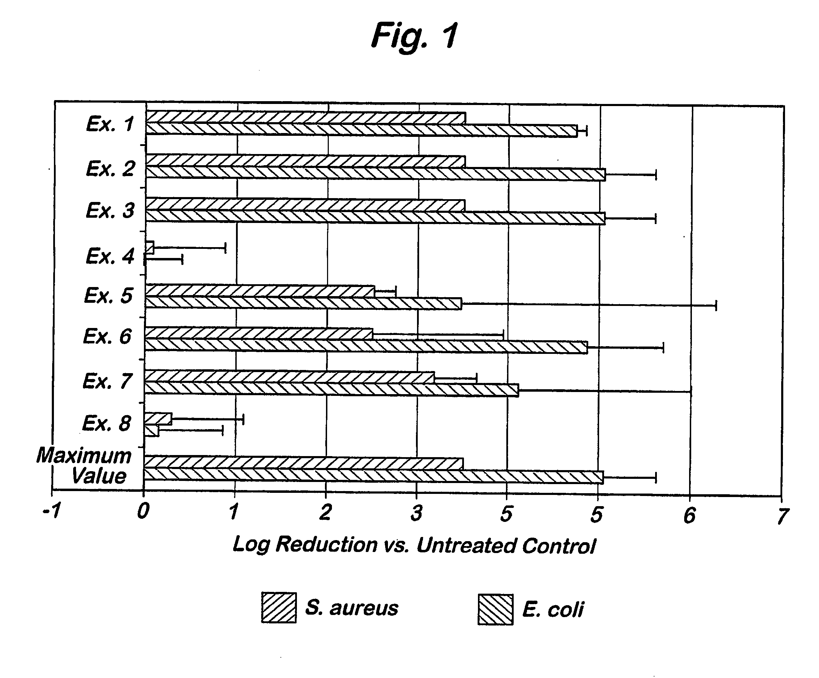

The physical properties of the films produced are given in Table 1. The coated films were analysed using the anti-microbial tests described herein. The results of the anti-bacterial tests are given in Figure 1. The error bars on the graph represent the standard deviation of the data from two separate experiments.

**Table 1**

| Example | Coat Thickness (µm) | RC2000 content (%) in the coating | ppb/cm² | Amount Ag on coat surface (µg /cm²) |
|---|---|---|---|---|
| 1 | 1.0 | 0.5 | 1.166 | 0.0184 |
| 2 | 1.0 | 1.0 | 3.301 | 0.0521 |
| 3 | 1.0 | 2.0 | 7.470 | 0.1180 |
| 4 | 1.0 | 0.0 | 0 | 0 |
| 5 | 1.5 | 2.0 | 4.186 | 0.0661 |
| 6 | 3.0 | 2.0 | 2.029 | 0.0320 |
| 7 | 4.6 | 2.0 | 2.138 | 0.0338 |
| 8 | 1.5 | 0.0 | 0 | 0 |

Examples 1 to 3 show that when the coat thickness is kept low, the amount of silver available on the coated film surface is proportional to the amount of anti-microbial agent in the coating. A comparison of Examples 3, 5, 6 and 7 show that, for the same amount of anti-microbial agent in the coating, the amount of silver available on the surface decreases as the coat thickness increases.

Figure 1 shows that all of Examples 1 to 3 and 5 to 7 show anti-microbial efficacy.

Examples 2 to 8 were also tested in the anti-fungal assay described above and the results ae shown in Table 2. After 14 days incubation, fungal growth on Examples 2, 3 and 5 was completely inhibited, and partially inhibited on Examples 6 and 7. No inhibition was observed for Example 4. A small degree of inhibition was also shown on Example 8.

**Table 2 Antifungal Properties**

| **Example** | **No. of Droplets in Category** | | |
|---|---|---|---|
| | **A** | **B** | **C** |
| 2 | 0 | 0 | 10 |
| 3 | 0 | 0 | 10 |
| 4 | 10 | 0 | 0 |
| 5 | 0 | 0 | 10 |
| 6 | 0 | 3 | 7 |
| 7 | 0 | 8 | 2 |
| 8 | 6 | 4 | 0 |

### Example 9

A shrinkable polyester film base was prepared in the following way. PET co-polymer (azelaic acid at 6.2% by weight of the diacids components; and diethylene glycol at 9.5% by weight of the glycol components) was extruded from a die and cast onto a chilled rotating drum. It was subsequently stretched by 3 times in the longitudinal direction between two nip rolls. The stretched film was then passed to the preheat zone of a stenter where the film temperature was raised to about 70°C. The film was then stretched 3 times in the transverse direction, and then passed into a heat setting ovens at a temperature of 75°C. After exiting the stenter, the film was wound up on to a core and subsequently slitted to the desired width for coating with antimicrobial solution. A PET substrate having approximately 30% shrinkage in both directions made above was coated with the solution of Examples 5 to 8 by roll coater and dried in an oven at 80°C. The shrinkage was retained in the coated film.

## Claims

1. An anti-microbial polymeric film comprising a polymeric substrate layer having a first and second surface and on a surface thereof a polymeric coating having a thickness of from 0.01 to 14.0µm and comprising an anti-microbial compound in an amount of from 0.1 to 50% by weight of the coating layer, **characterised in that** (i) said coating provides a heat-seal strength of from 39.4g/cm to 984.3g/cm (100 g/in to 2500 g/in) when heat- sealed to itself as measured at 121°C (250°F) under 207KPa (30psi) with 0.35 seconds dwell time and/or (ii) said coating provides a barrier to water vapour and/or oxygen, such that the water vapour transmission rate measured according to ASTM D3985 is in the range of 0.01 to 10g/645.16cm² (100 inches²)/day and the oxygen transmission rate measured according to ASTM F1249 is in the range of 0. 01 to 10 cm³ /645.16cm² (100 inches²)/day/atm, and (iii) said antimicrobial film exhibits a greater than 1 log reduction in the growth of a population of microbes.

2. An anti-microbial film according to claim 1 wherein the anti-microbial compound is in particulate form.

3. An anti-microbial film according to claim 1 or 2 wherein the anti-microbial compound is present in an amount of from 0.1 to 5%.

4. An anti-microbial film according to claim 1, 2 or 3 wherein the anti-microbial compound is an inorganic compound containing a metal or metal ions selected from silver, copper, zinc, tin, mercury, lead, iron, cobalt, nickel, manganese, arsenic, antimony, bismuth, barium, cadmium and chromium.

5. An anti-microbial film according to claim 1, 2 or 3 wherein the anti-microbial compound has the formula M¹ₐH_{b}A_{c}M²₂ (PO₄)₃.nH²O wherein: M¹ is at least one metal ion selected from silver, copper, zinc, tin, mercury, lead, iron, cobalt, nickel, manganese, arsenic, antimony, bismuth, barium, cadmium and chromium;
A is at least one ion selected from an alkali or alkaline earth metal ion;
M² is a tetravalent metal ion;
a and b are positive numbers and c is 0 or a positive number such that (ka + b + mc) = 1 ;
k is the valence of metal M¹;
m is the valence of metal A; and
0≤n≤6.

6. An anti-microbial film according to claim 1, 2 or 3 wherein the anti-microbial compound has the formula AgₐH_{b}A_{c}Zr₂(PO₄)₃.nH₂O wherein:
A is an alkali or alkaline earth metal ion;
a, b and c are positive numbers such that (a + b + mc) = 1;
m is the valence of metal A;
0≤n≤6.

7. An anti-microbial film according to claim 5 or 6 wherein a is in the range 0.1 to 0.5.

8. An anti-microbial film according to claim 5, 6 or 7 wherein b is at least 0.2.

9. A film according to any of claims 5 to 8 wherein the metal A is sodium and m is 1.

10. A film according to any preceding claim wherein the anti-microbial compound contains silver, copper or zinc.

11. A film according to any preceding claim wherein the anti-microbial compound contains silver.

12. An anti-microbial film according to any of claims 1 to 11 wherein said coating provides a water vapour transmission rate in the range of 0.01 to 10g /645.16cm² (100 inches²)/day, and/or an oxygen transmission rate in the range of 0. 01 to 10 cm³ /645.16cm² (100 inches²)/day/atm.

13. An anti-microbial film according to any of claims 1 to 12 wherein said coating provides a heat-seal strength of from 39.4g/cm to 984.3g/cm (100 to 2500 g/in) when heat-sealed to itself.

14. An anti-microbial film according to any preceding claim wherein the haze of the film is less than 15%.

15. An anti-microbial film according to any of claims 2 to 14 wherein the volume distributed mean particle diameter of the anti-microbial particles is in the range of 1.0 to 3.0µm.

16. An anti-microbial film according to any of claims 2 to 15 wherein the thickness of the coating layer is in the range of 70 to 130% of the volume distributed mean particle diameter of the anti-microbial particles.

17. An anti-microbial film according to any of claims 2 to 15 wherein the thickness of the coating layer is less than the volume distributed mean particle diameter of the anti-microbial particles, preferably such that thickness is in the range of 70 to 99 % of the volume distributed mean particle diameter of the anti-microbial particles.

18. A film according to any preceding claim wherein said polymeric substrate is selected from polyester, polyolefin, polyamide and PVC.

19. A film according to any preceding claim wherein said polymeric substrate comprises polyester.

20. A film according to any preceding claim wherein said polymeric substrate comprises polyethylene terephthalate.

21. A film according to any preceding claim wherein said polymeric substrate has a degree of shrinkage in one or both dimensions of 10% to 60% when placed in a water bath at 100°C for 30 seconds.

22. A film according to any preceding claim wherein the gloss is at least 70.

23. A film according to any of claims 1 to 22 wherein the polymer of a coating layer is selected from PVDC, PCTFE, PE, PP, EVOH, PVOH, EVA, polyester and caprolactone.

## Patentansprüche

1. Antimikrobieller Polymerfilm, umfassend eine Polymersubstratschicht, die eine erste und eine zweite Oberfläche aufweist und auf einer Oberfläche davon einen Polymerüberzug mit einer Dicke von 0,01 bis 14,0 µm und umfassend eine antimikrobielle Verbindung in einer Menge von 0,1 bis 50 Gew.-% der Überzugsschicht, **dadurch gekennzeichnet, dass** (i) der Überzug eine Heißversiegelungsfestigkeit von 39,4 g/cm bis 984,3 g/cm (100 g/in bis 2500 g/in) bei Heißversiegelung mit sich selbst, wie gemessen bei 121 °C (250 °F) unter 207 kPa (30 psi) mit 0,35 Sekunden Haltezeit, bereitstellt und/oder (ii) der Überzug eine Sperre gegen Wasserdampf und/oder Sauerstoff bereitstellt, so dass die gemäß ASTM D3985 gemessene Wasserdampf-Übertragungsrate im Bereich von 0,01 bis 10 g/645,16 cm² (100 Inch²)/Tag liegt und die gemäß ASTM F1249 gemessene Sauerstoff-Übertragungsrate im Bereich von 0,01 bis 10 cm³/645,16 cm² (100 Inch²)/Tag/atm liegt, und (iii) der antimikrobielle Film eine mehr als 1-log-Verringerung des Wachstums einer Population von Mikroben zeigt.

2. Antimikrobieller Film gemäß Anspruch 1, wobei die antimikrobielle Verbindung in partikulärer Form vorliegt.

3. Antimikrobieller Film gemäß Anspruch 1 oder 2, wobei die antimikrobielle Verbindung in einer Menge von 0,1 bis 5% vorhanden ist.

4. Antimikrobieller Film gemäß Anspruch 1, 2 oder 3, wobei die antimikrobielle Verbindung eine anorganische Verbindung ist, die ein Metall oder Metallionen enthält, ausgewählt aus Silber, Kupfer, Zink, Zinn, Quecksilber, Blei, Eisen, Kobalt, Nickel, Mangan, Arsen, Antimon, Wismut, Barium, Cadmium und Chrom.

5. Antimikrobieller Film gemäß Anspruch 1, 2 oder 3, wobei die antimikrobielle Verbindung die Formel M¹ₐH_{b}A_{c}M²₂(PO₄)₃.nH₂O aufweist, wobei:
M¹ wenigstens ein Metall-Ion ist, ausgewählt aus Silber, Kupfer, Zink, Zinn, Quecksilber, Blei, Eisen, Kobalt, Nickel, Mangan, Arsen, Antimon, Wismut, Barium, Cadmium und Chrom;
A wenigstens ein Ion ist, ausgewählt aus einem Alkali- oder Erdalkalimetall-Ion;
M² ein tetravalentes Metall-Ion ist;
a und b positive Zahlen sind und c 0 oder eine positive Zahl ist, so dass (ka + b + mc) = 1;
k die Valenz des Metalls M¹ ist;
m die Valenz des Metalls A ist; und
0≤n≤ 6.

6. Antimikrobieller Film gemäß Anspruch 1, 2 oder 3, wobei die antimikrobielle Verbindung die Formel AgₐH_{b}A_{c}Zr₂(PO₄)₃.nH₂O aufweist, wobei:
A ein Alkali- oder Erdalkalimetall-Ion ist;
a, b und c positive Zahlen sind, so dass (a + b + mc) = 1;
m die Valenz des Metalls A ist;
0≤n≤6.

7. Antimikrobieller Film gemäß Anspruch 5 oder 6, wobei a im Bereich von 0,1 bis 0,5 liegt.

8. Antimikrobieller Film gemäß Anspruch 5, 6 oder 7, wobei b wenigstens 0,2 ist.

9. Film gemäß einem der Ansprüche 5 bis 8, wobei das Metall A Natrium ist und m 1 ist.

10. Film gemäß einem der vorstehenden Ansprüche, wobei die antimikrobielle Verbindung Silber, Kupfer oder Zink enthält.

11. Film gemäß einem der vorstehenden Ansprüche, wobei die antimikrobielle Verbindung Silber enthält.

12. Antimikrobieller Film gemäß einem der Ansprüche 1 bis 11, wobei der Überzug eine Wasserdampf-Übertragungsrate im Bereich von 0,01 bis 10 g/645,16 cm² (100 Inch²)/Tag und/oder eine Sauerstoff-Übertragungsrate im Bereich von 0,01 bis 10 cm³/645, 16 cm² (100 Inch²)/Tag/atm bereitstellt.

13. Antimikrobieller Film gemäß einem der Ansprüche 1 bis 12, wobei der Überzug eine Heißversiegelungsfestigkeit von 39,4 g/cm bis 984,3 g/cm (100 g/in bis 2500 g/in) bei Heißversiegelung mit sich selbst bereitstellt.

14. Antimikrobieller Film gemäß einem der vorstehenden Ansprüche, wobei die Trübung des Films weniger als 15 % beträgt.

15. Antimikrobieller Film gemäß einem der Ansprüche 2 bis 14, wobei der volumenverteilte mittlere Partikeldurchmesser der antimikrobiellen Partikel im Bereich von 1,0 bis 3,0 µm liegt.

16. Antimikrobieller Film gemäß einem der Ansprüche 2 bis 15, wobei die Dicke der Überzugsschicht im Bereich von 70 bis 130 % des volumenverteilten mittleren Partikeldurchmessers der antimikrobiellen Partikel liegt.

17. Antimikrobieller Film gemäß einem der Ansprüche 2 bis 15, wobei die Dicke der Überzugsschicht weniger als der volumenverteilte mittlere Partikeldurchmesser der antimikrobiellen Partikel beträgt, vorzugsweise so, dass die Dicke im Bereich von 70 bis 99 % des volumenverteilten mittleren Partikeldurchmessers der antimikrobiellen Partikel liegt.

18. Film gemäß einem der vorstehenden Ansprüche, wobei das Polymersubstrat ausgewählt ist aus Polyester, Polyolefin, Polyamid und PVC.

19. Film gemäß einem der vorstehenden Ansprüche, wobei das Polymersubstrat Polyester umfasst.

20. Film gemäß einem der vorstehenden Ansprüche, wobei das Polymersubstrat Polyethylenterephthalat umfasst.

21. Film gemäß einem der vorstehenden Ansprüche, wobei das Polymersubstrat, wenn bei 30 Sekunden in einem Wasserbad mit 100°C angeordnet, einen Schrumpfungsgrad in einer oder beiden Dimensionen von 10 % bis 60 % aufweist.

22. Film gemäß einem der vorstehenden Ansprüche, wobei der Glanz wenigstens 70 beträgt.

23. Film gemäß einem der Ansprüche 1 bis 22, wobei das Polymer der Überzugsschicht ausgewählt ist aus PVDC, PCTFE, PE, PP, EVOH, PVOH, EVA, Polyester und caprolacton.

## Revendications

1. Film polymère antimicrobien comprenant une couche de substrat polymère ayant une première surface et une seconde surface et sur une surface de celle-ci un revêtement polymère ayant une épaisseur de 0,01 à 14,0 µm et comprenant un composé antimicrobien en une quantité de 0,1 à 50 % en poids par rapport à la couche de revêtement, **caractérisé en ce que**
(i) ledit revêtement assure une résistance au thermocollage de 39,4 g/cm à 984,3 g/cm (100 g/pouce à 2 500 g/pouce) lorsqu'il est thermocollé à lui-même telle que mesurée à 121 °C (250 °F) sous 207 kPa (30 psi) avec un temps de maintien de 0,35 seconde et/ou
(ii) ledit revêtement forme une barrière à la vapeur d'eau et/ou à l'oxygène, de façon à ce que le taux de perméabilité à la vapeur d'eau mesuré selon la norme ASTM D3985 soit dans la plage de 0,01 à 10 g/645,16 cm² (100 pouces²)/jour et le taux de perméabilité à l'oxygène mesuré selon la norme ASTM F1249 soit dans la plage de 0,01 à 10 cm³/645,16 cm² (100 pouces²)/jour/atm et
(iii) ledit film antimicrobien présente une réduction logarithmique supérieure à 1 du développement d'une population de microbes.

2. Film antimicrobien selon la revendication 1 dans lequel le composé antimicrobien est sous forme particulaire.

3. Film antimicrobien selon la revendication 1 ou 2 dans lequel le composé antimicrobien est présent en une quantité de 0,1 à 5 %.

4. Film antimicrobien selon la revendication 1, 2 ou 3 dans lequel le composé antimicrobien est un composé inorganique contenant un métal ou des ions métalliques choisis parmi l'argent, le cuivre, le zinc, l'étain, le mercure, le plomb, le fer, le cobalt, le nickel, le manganèse, l'arsenic, l'antimoine, le bismuth, le baryum, le cadmium et le chrome.

5. Film antimicrobien selon la revendication 1, 2 ou 3 dans lequel le composé antimicrobien répond à la formule M¹ₐH_{b}A_{c}M²₂(PO₄)₃.nH₂O dans laquelle :
M¹ est au moins un ion métallique choisi parmi l'argent, le cuivre, le zinc, l'étain, le mercure, le plomb, le fer, le cobalt, le nickel, le manganèse, l'arsenic, l'antimoine, le bismuth, le baryum, le cadmium et le chrome ;
A est au moins un ion choisi parmi un ion de métal alcalin ou alcalinoterreux ;
M² est un ion métallique tétravalent ;
a et b sont des nombres positifs et c vaut 0 ou est un nombre positif tels que (ka + b + mc) = 1 ;
k est la valence du métal M¹ ;
m est la valence du métal A ; et
0 ≤ n ≤ 6.

6. Film antimicrobien selon la revendication 1, 2 ou 3 dans lequel le composé antimicrobien répond à la formule AgₐH_{b}A_{c}Zr₂(PO₄)₃.nH₂O dans laquelle :
A est un ion de métal alcalin ou alcalinoterreux ;
a, b et c sont des nombres positifs tels que (a + b + mc) = 1 ;
m est la valence du métal A ; et
0 ≤ n ≤ 6.

7. Film antimicrobien selon la revendication 5 ou 6 dans lequel a est dans la plage de 0,1 à 0,5.

8. Film antimicrobien selon la revendication 5, 6 ou 7 dans lequel b vaut au moins 0,2.

9. Film selon l'une quelconque des revendications 5 à 8 dans lequel le métal A est le sodium et m vaut 1.

10. Film selon l'une quelconque des revendications précédentes dans lequel le composé antimicrobien contient de l'argent, du cuivre ou du zinc.

11. Film selon l'une quelconque des revendications précédentes dans lequel le composé antimicrobien contient de l'argent.

12. Film antimicrobien selon l'une quelconque des revendications 1 à 11 dans lequel ledit revêtement assure un taux de perméabilité à la vapeur d'eau dans la plage de 0,01 à 10 g/645,16 cm² (100 pouces²) /jour et/ou un taux de perméabilité à l'oxygène dans la plage de 0,01 à 10 cm³/645,16 cm² (100 pouces²)/jour/atm.

13. Film antimicrobien selon l'une quelconque des revendications 1 à 12 dans lequel ledit revêtement assure une résistance au thermocollage de 39,4 g/cm à 984,3 g/cm (100 à 2 500 g/pouce) lorsqu'il est thermocollé à lui-même.

14. Film antimicrobien selon l'une quelconque des revendications précédentes, le trouble du film étant inférieur à 15 %.

15. Film antimicrobien selon l'une quelconque des revendications 2 à 14 dans lequel le diamètre de particule moyen en volume des particules antimicrobiennes est dans la plage de 1,0 à 3,0 µm.

16. Film antimicrobien selon l'une quelconque des revendications 2 à 15 dans lequel l'épaisseur de la couche de revêtement est dans la plage de 70 à 130 % du diamètre de particule moyen en volume des particules antimicrobiennes.

17. Film antimicrobien selon l'une quelconque des revendications 2 à 15 dans lequel l'épaisseur de la couche de revêtement est inférieure au diamètre de particule moyen en volume des particules antimicrobiennes, de préférence de façon à ce que l'épaisseur soit dans la plage de 70 à 99 % du diamètre de particule moyen en volume des particules antimicrobiennes.

18. Film selon l'une quelconque des revendications précédentes dans lequel ledit substrat polymère est choisi parmi un polyester, une polyoléfine, un polyamide et le PVC.

19. Film selon l'une quelconque des revendications précédentes dans lequel ledit substrat polymère comprend du polyester.

20. Film selon l'une quelconque des revendications précédentes dans lequel ledit substrat polymère comprend du poly(téréphtalate d'éthylène).

21. Film selon l'une quelconque des revendications précédentes dans lequel ledit substrat polymère a un degré de retrait dans une dimension ou les deux dimensions de 10 % à 60 % lorsqu'il est placé dans un bain d'eau à 100 °C pendant 30 secondes.

22. Film selon l'une quelconque des revendications précédentes dans lequel le brillant est d'au moins 70.

23. Film selon l'une quelconque des revendications 1 à 22 dans lequel le polymère d'une couche de revêtement est choisi parmi le PVDC, le PCTFE, le PE, le PP, l'EVOH, le PVOH, l'EVA, un polyester et la caprolactone.
